# EUROPÄISCHE PATENTSCHRIFT

(11) **EP 0 858 519 B1**
(45) Veröffentlichungstag und Bekanntmachung des Hinweises auf die Patenterteilung: **10.05.2000**
(21) Anmeldenummer: 96937320.8
(22) Anmeldetag: 31.10.1996
(51) Int. Cl.: C23C 4/08, C23C 4/02, C23C 4/18

(54) **VERFAHREN ZUM HERSTELLEN EINER GLEITFLÄCHE AUF EINEM METALLISCHEN WERKSTÜCK**
METHOD OF PRODUCING A SLIDING SURFACE ON A METAL WORKPIECE
PROCEDE DE PRODUCTION D'UNE SURFACE DE FROTTEMENT SUR UNE PIECE METALLIQUE

(30) Priorität: 31.10.1995 DE 19540572; 31.10.1995 DE 19549403; 17.07.1996 DE 19628786
(43) Veröffentlichungstag der Anmeldung: 19.08.1998
(73) Patentinhaber: Volkswagen Aktiengesellschaft, 38436 Wolfsburg (DE); Sulzer Metco AG, 5610 Wohlen (CH)
(72) Erfinder: KLOFT, Manfred, D-38154 Rhode (DE); STRICH, Reinhard, D-38118 Braunschweig (DE); BARBEZAT, Gérard, CH-8152 Glattbrugg (CH)
(74) Vertreter: von Biedersee, Heidereich
(86) Internationale Anmeldenummer: EP9604745
(87) Internationale Veröffentlichungsnummer: WO9716578

(56) Entgegenhaltungen:
- DE-A- 2 433 814
- US-A- 5 080 056
- DATABASE WPI Section Ch, Week 9342 Derwent Publications Ltd., London, GB; Class M13, AN 93-334588 XP002025367 & SU 1 767 010 A (KARPENKO PHYS MECH INST) , 7.Oktober 1992
- DATABASE WPI Section Ch, Week 8428 Derwent Publications Ltd., London, GB; Class M13, AN 84-173116 XP002025366 & JP 59 093 865 A (TOYOTA MOTOR KK) , 30.Mai 1984
- DATABASE WPI Section Ch, Week 7821 Derwent Publications Ltd., London, GB; Class M13, AN 78-37705A XP002025365 & JP 53 041 621 A (HONDA MOTOR IND KK) , 15.April 1978
- STEEL IN THE USSR, Bd. 17, Nr. 3, 1987, LONDON, Seiten 148-150, XP002025365 LEVCHENKO: "Structure and properties of arc sprayed, stell- molybdenum coatings"

## Beschreibung

Die Erfindung betrifft ein Verfahren gemäß dem Oberbegriff des Patentanspruches 1.

Die Erfindung betrifft weiter eine Hubkolbenmaschine, insbesondere eine Verbrennungskraftmaschine, gemäß dem Oberbegriff des Patentanspruchs 24.

Aus der SU-A-1 767 010 ist eine eisen-molybdän-chromhaltige Legierung bekannt die als reibungs- und korrosionsbeständigen Beschichtung durch Plasmabeschichtung aufgetragen werden kann. Solche Legierungen zeigen nur auf wenigen Substraten eine hohe Haftfestigkeit.

Die JP-A-59 093 865 beschreibt hoch-C-haltige Eisen-Chrom-Legierungen mit hoher Vickershärte, die in einer Mischung mit Molybdän und weiteren Legierungen durch Plasmabeschichtung aufgetragen werden kann. Diese Beschichtung eignet sich insbesondere für Reibungsflächen. Die zum Einsatz kommende Stahllegierung weist eine Vickershärte von 830 bis 1000 auf, die einen hohen eigenen Verschleißschutz bewirkt, je nach verwendetem Substrat oder Reibpartner jedoch Defizite zeigen kann. Geeignet sind solche Plasmaschichten im wesentlichen nur für von Natur aus sehr harte Substrate, wie beispielsweise Kolbenringe.

Aus der JP-A-53 041 621 ist eine plasmaverspritzbare Mischung aus Molybdän und reduziertem Eisenpulver bekannt. Bei der Verwendung von reduziertem Eisen anstatt Stahl wird erreicht, daß die enthaltene Beschichtung keine Oxidanschlüsse aufweist, da der vorliegende Kohlenstoff weder als Karbid noch gelöst vorliegt, und damit die Oxidbildung verhindert. Solche Mischungen sind zwar zum Auftrag auf Aluminiumsubstrate geeignet, das Verschleißverhalten gegenüber harten Reibungspartnern wie Kolbenringen ist jedoch verbesserungsfähig.

Aus der DE-A-24 33 814 ist ein Pulvergemisch mit Molybdän als Hauptbestandteil und kleineren bis mittleren Anteilen diverser Übergangselemente bekannt. Auch dieses Gemisch ist zur Plasmabeschichtung im Verbrennungsmotorenbereich einsetzbar, hinsichtlich ihres Verschleißverhaltens sind jedoch auch diese Schichten deutlich verbesserungsfähig.

In Steel in the USSR, Bd.17, Nr. 3, 1987, London, Seiten 148 bis 150 wird eine Stahl-Molybdänbeschichtung für Kolbenringe beschrieben. Die Beschichtung wird verhältnismäßig dick aufgetragen und erreicht günstig hohe Vickershärten. Zum Einsatz kommt hierbei ein karbidhaltiges Gußeisen mit einem verhältnismäßig hohen Kohlenstoffgehalt, der die relativ hohe Härte bedingt. Gußeisenstähle bereiten jedoch wegen ihres verhältnismäßig hohen Kohlenstoffgehaltes beim Plasmaspritzen Schwierigkeiten, da durch das Aufschmelzen des Gußeisenstahls völlig neue Gefüge entstehen können und somit das Abschätzen der Stahlqualität in der resultierenden Beschichtung schwierig ist.

Aus der DE-44 40 713 A1 ist ein Verfahren zum Herstellen von Gleitflächen auf Gußeisenteilen bekannt, welches in mehreren Verfahrensschritten Schmiertaschen in der Gleitfläche offenlegt, welche im Betrieb eine hydrodynamische Schmierung gewährleisten sollen. Die Verfahrensschritte umfassen dabei ein mechanisches Bearbeiten der betreffenden Flächen, anschließend ein Bearbeiten mit einer chemisch und elektrochemisch inaktiven Flüssigkeit unter einem zur Flitterentfernung geeigneten Druck. Durch die Kombination der Verfahrensschritte Flüssigkeitsstrahlen und Reibplattieren werden in der betreffenden Oberfläche die Schmiertaschen freigelegt, welche in ihrer Gesamtheit ein die erforderliche hydrodynamische Schmierung gewährleistendes Microdruckkammersystem bilden. Die Materialausbrüche werden dadurch erzielt, daß durch eine Honbearbeitung Titan-Karbide und Titan-Nitride aus der Oberfläche herausgerissen werden, wobei die so entstehenden Krater durch die weitere Bearbeitung wieder zugeschmiert werden. Das anschließende Flüssigkeitsstrahlen und Reibplattieren legt diese Vertiefungen wieder frei.

Grundsätzlich ist es aus der US-A-5,080,056 bekannt, auf aus einer Aluminiumlegierung bestehende Werkstücke durch Hochgeschwindigkeits-Flammspritzen eine im wesentlichen porenfreie Aluminium-Bronze-Legierung aufzubringen, deren Schichtdicke von ca. 1 mm anschließend durch Honen auf ein Endmaß von ca. 127 µm bearbeitet wird.

Es ist bereits bekannt, im Gegensatz zu einem Microdruckkammersystem ein kommunizierendes System, beispielsweise auf Zylinderlaufbahnen von Brennkraftmaschinen, durch eine Honbearbeitung zu erzielen. Hierbei entstehen sich kreuzende Riefen, welche durch die Kreuzungsbereiche miteinander verbunden sind und insgesamt ein offenes System darstellen. Nachteilig hierbei ist es, daß das auf der Gleitfläche gleitende Werkstück, beispielsweise ein Kolbenring eines Kolbens einer Brennkraftmaschine, das in den Riefen befindliche Öl vor sich her schiebt, wodurch kein hydrodynamischer Öldruck aufgebaut werden kann. Infolgedessen kommt es an den Riefenkanten zu einer Mischreibung zwischen den beteiligten Gleitpartnern. Dieses bei Grauguß-Werkstücken weitverbreitete Schmierungssystem ist bei Werkstücken, die aus Gewichtsgründen aus einer Aluminiumlegierung bestehen sollen, nicht anwendbar.

Aus der US-A 2,588,422 ist ein Aluminiummotorblock bekannt, dessen Zylinderlaufbahnen eine thermisch gespritzte Beschichtung aufweisen. Diese Beschichtung ist auf der unbehandelten Motorblockoberfläche zweischichtig aufgebaut aus einer stählernen Gleitschicht von ca. 1 mm Dicke und einer molybdänhaltigen Zwischenschicht von ca. 50 µm Dicke. Die Zwischenschicht, die zu mindestens 60 % Molybdän enthält, dient nicht als Gleitschicht sondern ist notwendig, um die harte Gleitschicht mit dem Aluminiumblock zu verbinden. Bevorzugt ist diese Verbindungsschicht aus reinem Molybdän aufgebaut. Die Gleitschicht ist eine harte Metallschicht, wie beispielsweise Carbonstahl, Bronze oder rostfreier Stahl, wobei der Stahl legiert sein kann mit beispielsweise Nickel, Chrom, Vanadium oder Molybdän. Grundsätzlich wird mit diesem Schichtaufbau eine gute Gleitschicht zur Verfügung gestellt, wobei jedoch der Aufwand der Doppelbeschichtung erheblich ist.

Aus der GB 2 050 434 A sind verschiedene durch thermisches Spritzen erhaltene Beschichtungen von 0,5 bis 2,5 mm Dicke bekannt. Diese Beschichtungen befinden sich auf Stahl oder Gußteilen von Brennkraftmaschinen, wie beispielsweise Kolbenringen oder Zylinderlaufbüchsen. Hierbei wird festgestellt, daß Beschichtungen, die aus gleichen Teilen Molybdänpulver und Carbonstahlpulver bestehen, auf den genannten Materialien erheblich weniger abriebsbeständig sind als Beschichtungen, die nur 0,5 bis 4,5-Gew.% Molybdän neben 20 bis 97-Gew.% Metallcarbiden und ggf. Eisen oder eisenhaltiger Legierung enthalten. Für eine Verbindung dieser Beschichtungen auf Aluminiumlegierungen muß auf die vorgenannte US-A 2,588,422 zurückgegriffen werden.

Die GB-PS 1 478 287 beschreibt eine Pulvermischung zur Plasmabeschichtung von Stahl- oder Gußteilen in einer Dicke von ca. 762 - 1270 µm, wie beispielsweise Kolbenringen, Zylinderblöcken oder Zylinderlaufbüchsen. Das Pulver ist eine Mischung aus Molybdän, Bor und Gußeisen, wobei mindestens soviel Gußeisen wie Molybdän enthalten ist; das Bor liegt üblicherweise bis 3 % der Summe aus Molybdän und Gußeisen vor. Solche Beschichtungen entsprechen, wie das Beispiel 1 aus der GB 2 050 434 A zeigt, nicht mehr den heutigen Qualitätsanforderungen.

Eine weitere Beschichtung für Zylinderlaufbüchsen ist aus der DE-AS 21 46 153 bekannt, in der eine Plasmabeschichtung, die neben mindestens 65-Gew.% Molybdän noch Nickel und Chrom, Bor, Silicium und ggf. noch Eisen enthält, beschrieben ist. Diese Beschichtung von Zylinderlaufbüchsen, die aus Graugußeisen gefertigt sind, weist sehr kleine Poren von 0,1 - 2 µ und eine Gesamtporosität von 15 % auf und entspricht den zuvor beschriebenen Beschichtungen aus den britischen Schriften.

Aufgabe der Erfindung ist es, ein Verfahren zur Herstellung einer Gleitfläche auf einem Körper, insbesondere einer Aluminiumlegierung zur Verfügung zu stellen, das mit einem einzigen Beschichtungsvorgang auskommt. Aufgabe der Erfindung ist ferner eine entsprechende Hubkolbenmaschine mit einem Motorblock aus einer Aluminiumlegierung.

Die Lösung dieser Aufgabe gelingt mit den Maßnahmen des Patentanspruches 1, 12 und/oder 19.

Vorteilhafte Ausgestaltung des Verfahrens sind in den abhängigen Ansprüchen angegeben.

Die Merkmale des Patentanspruchs 24 lösen die Aufgabe hinsichtlich der Hubkolbenmaschine.

Das erfindungsgemäße Verfahren stellt in vergleichsweise einfacher Weise ein Microdruckkammersystem bereit , indem auf ein Werkstück, z. B. aus einer Aluminiumlegierung, durch thermisches Spritzen (wie es in DIN 32530, Okt. 89, beschrieben ist) eine Verschleißschicht aufgebracht wird, welche anschließend unter Freilegung der Schmiertaschen des Microdruckkammersystems durch mechanisches Bearbeiten teilweise abgetragen wird. Hierdurch wird eine Gleitfläche auf dem metallischen Werkstück geschaffen, welche eine ausreichende Verschleißfestigkeit aufweist, welche der Grundwerkstoff nicht bietet, wobei durch das thermische Spritzen und die anschließende mechanische Bearbeitung eine Vielzahl von Materialausbrüchen entsteht, welche während der mechanischen Bearbeitung nur zu einem geringen Teil zugeschmiert werden und in Folge dessen eine ausreichende Anzahl von das Microdruckkammersystem bildenden Vertiefungen bereitstellt.

Das Microdruckkammersystem auf der Gleitfläche entsteht somit in gänzlich anderer Art und Weise als in dem eingangs genannten Stand der Technik, welcher notwendigerweise auf das Vorhandensein von Titananteilen angewiesen ist.

In vorteilhafter Ausgestaltung der Erfindung wird die Verschleißschicht mittels Plasmaspritzen, insbesondere atmosphärisches Plasmaspritzen, aufgebracht. Diese Plasmaspritzschichten sind von sich aus bereits mikroporös, so daß bei ihnen durch einen einmaligen Bearbeitungsvorgang, beispielsweise Honen, das Microdruckkammersystem erzeugt werden kann.

Das in der US-A-5,080,056 vorgeschlagene Hochgeschwindigkeitsflammspritzen kann bei einer Vielzahl von Werkstücken, beispielsweise bei Zylinderlaufbahnen von Brennkraftmaschinen infolge der vergleichsweise hohen eingebrachten Energie nicht angewendet werden, da es zu Verzügen in den Zylinderlaufbahnen kommen kann.

Das erfindungsgemäße Verfahren vermeidet vorteilhafterweise jeglichen umweltbelastenden, galvanischen Verfahrensschritt. Bei Verwendung von geeigneten Spritzpulvern für das Plasmaspritzen sowie geeigneter Parameter für das Honen lassen sich extrem glatte Gleitflächen mit äußerst geringen Rauhtiefewerten schaffen, welche zur hydrodynamischen Schmierung das vorgenannte Microdruckkammersystem aufweisen.

Gemäß der vorliegenden Erfindung hat sich herausgestellt, daß eine Mischung aus Stahlpulver mit Molybdänpulver sich besonders gut für das thermische Spritzen zur Erzielung von Gleitflächen auf Aluminiumlegierungen eignet. Diese Mischung setzt sich zusammen aus 10 bis 70 % Molybdänpulver und 90 bis 30 % Stahlpulver, wobei 30 bis 50 % Molybdänpulver und 70 bis 50 % Stahlpulver besonders bevorzugt sind. Die Mischung kann ggf. noch um weitere Komponenten ergänzt werden, die vorteilhaft weniger als 50 Gew.-% der Gesamtmischung ausmachen. Als eine der günstigsten Mischung hat sich eine 50 : 50 Mischung herausgestellt. Auch wenn solche Mischungen im Stand der Technik auf gußeisernen Substraten zu mäßigen, d. h. nicht verschleißfesten Beschichtungen führen (vergl. insbesondere GB 2 050 434 A), so ist eine solche Beschichtung auf Aluminium außerordentlich haftfest und abriebsfest. Man erhält somit erfindungsgemäß die Gleitfläche unmittelbar auf der auf der Aluminiumlegierung abgeschiedenen Schicht und benötigt keine Zwischenschicht, wie sie in der US 2,588,422 beschrieben ist. Das besondere an der vorliegenden Erfindung ist, daß auf dem verhältnismäßig weichen Untergrund einer Aluminiumlegierung eine verschleißfeste Schicht direkt haftend aufgetragen werden kann. Mit zur Erfindung gehört die Beschichtung von Aluminium-Motorblöcken einer Hubkolbenmaschine, wobei die Beschichtung sich des Verfahrens bedient.

Bei dem erfindungsgemäßen thermischen Spritzen wird vorzugsweise ein Plasmaspritzen eingesetzt, wobei die Mischung des zu verspritzenden Metalls insbesondere als Pulver zum Einsatz kommt. Da das Pulver während des Spritzens zumindest angeschmolzen auf die Oberfläche des Werkstückes geschleudert wird, ist für die Qualität des Arbeitsergebnisses das Einhalten einer bestimmten Partikelgröße (Verteilung) vorteilhaft. Beim Einsatz von Pulvern eignen sich vorteilhaft Partikel zwischen 2 und 70 µm und insbesondere 5 und 50 µm, wobei 90 Volumenprozent der Partikel in diesem Bereich liegen sollen.

Zum Einsatz in der vorliegenden Erfindung haben sich bestimmte Stähle als besonders vorteilhaft herausgestellt, wobei eine Reihe von Eigenschaften des Stahls allein oder in Summa zu besonders günstigen Gleitbeschichtungen führt. Zu diesen besonderen Eigenschaften gehört u. a. die Härte des Stahls, wobei hier verschiedene Kriterien maßgeblich sein können. So kann die Härte des weichgeglühten Stahls, des thermisch gespritzten Stahls oder auch die Härte der gespritzten Mischung Molybdän/Stahl als Kriterium herangezogen werden. Bei den Mischungen kommt zudem noch die Härteverteilung über die Mischungen als Auswahlkriterium des Stahls in Betracht. Die einzelnen Parameter hierfür sind im Anspruch 1 wiedergegeben. Bei den angegebenen Härtekriterien wird neben einer geringen Porosität auch eine sehr gute Haftung auf dem Substrat (insbesondere Aluminiumlegierung) und eine gute Bearbeitbarkeit erreicht. Bei einer zu hohen Härte des Stahl steigt die Gefahr von Schichtausbrüchen an, ein zu weicher Stahl verschmiert beim Bearbeiten.

Weitere vorteilhafte Kriterien für die Herstellung der erfindungsgemäßen Gleitbeschichtung sind die Auftragsparameter und der Untergrund des Körpers. So wurde erfindungsgemäß festgestellt, daß mit den Molybdän/Stahl-Mischungen dünne Schichten, d. h. solche von 80 bis 350 µm besonders geeignet sind. Im oben genannten Stand der Technik sind die entsprechenden Beschichtungen wesentlich dicker, d. h. insbesondere 500 µm bis 2, 5 mm, wobei für Zylinderlaufflächen regelmäßig Beschichtungen im Bereich von 1000 µm gebildet werden. Bei der Verwendung von Molybdän/Stahl hat sich jedoch erfindungsgemäß herausgestellt, daß die dicken Beschichtungen nicht nur unwirtschaftlich sind, sondern auch wesentliche weitere Nachteile haben. So blättern die Beschichtungen über 350 µm leicht wieder von dem Subtrat ab, insbesondere bei der Verwendung einer Aluminiumlegierung als Substrat. Auch die Verwendung dünnerer Schichten ist wenig geeignet, da hierdurch die anschließende mechanische Bearbeitung (Honbarkeit) beeinträchtigt wird.

Als besonders vorteilhaft hat sich auch die Vorbehandlung der zu beschichtenden Substratoberfläche erwiesen, wobei das Aufrauhen nicht durch Schleifen, sondern durch einen Partikel- oder Fluidstrom erfolgt. Das Aufrauhen von Oberflächen vor der Plasmabeschichtung ist zwar grundsätzlich bekannt, wobei jedoch für molybdänhaltige Beschichtungen, wie es beispielsweise die US 2,588,422 beschreibt, bisher ausdrücklich kein Aufrauhen erfolgte, sondern höchstens eine Oberflächenreinigung. Erfindungsgemäß wurde jedoch festgestellt, daß erst mit dem speziellen Aufrauhverfahren eine sehr gute Oberflächenhaftung der Molybdän/Stahl-Schicht erreicht wird. Ganz besonders vorteilhaft ist hier die Verwendung von Korund zum Aufrauhen, der gegenüber Aluminiumoxid sehr gute Langzeitergebnisse erbringt.

Erfindungsgemäß wurde außerdem festgestellt, daß nur ganz bestimmte Mittenrauhwerte für besonders gut haftende Schichten geeignet sind. So wurde festgestellt, daß Mittenrauhwerte von 4 bis 35 µm, bevorzugt 5 bis 22 µm und insbesondere 5 bis 15 µm besonders geeignet sind, unterhalb wird eine nur mäßige Schichthaftung und oberhalb eine beschichtungsungünstige Oberfläche für Molybdän/Stahl-Beschichtungen erhalten. Weitere erfindungsgemäße vorteilhafte Spritzparameter sind die Wahl der Porosität, insbesondere eingeschlossen des Oxidgehaltes, in der Beschichtung und die Herstellung überwiegend geschlossener (solitärer) Poren sowie ein vorteilhafter Porendurchmesserbereich. Gemäß des Stands der Technik werden Porositäten von praktisch porositätsfrei bis ca. 15 % beschrieben, wobei bei der Verwendung molybdänhaltiger Beschichtungen (auf Graugußsubstraten) Porositäten von etwa 15 % gespritzt wurden (DE-AS 21 46 153). Erfindungsgemäß wurde jedoch festgestellt, daß bei so hohen Porositäten es beim anschließenden Honvorgang zu Schichtausbrüchen kommt, insbesondere auf Aluminiumsubstraten. Andererseits ist es erfindungsgemäß auch wenig vorteilhaft, eine porositätsfreie Beschichtung herzustellen, eine Porosität von mindestens 0,3 % hat sich hier als vorteilhaft zum Aufbau eines Mikrodruckkammersystems auf der Gleitoberfläche erwiesen. Grundsätzlich ist es hierfür auch vorteilhaft, wenn die Poren überwiegend geschlossen und in einem bestimmten Dickenbereich liegen. Auch dies unterscheidet die Erfindung vom letztgenannten Stand der Technik, in dem die Poren aufgrund ihres hohen Volumenanteils miteinander verbunden sind (offenporig) und in dem die Mehrzahl der Poren in einem Größenbereich von 0,1 bis 2 µm liegt. Solche Poren erwiesen sich für den erfindungsgemäßen Aufbau eines Mikrodruckkammersystems mit Molybdän/Stahl-Beschichtungen als nicht geeignet.

Letztendlich haben sich noch bestimmte chemische Zusammensetzungen des verwendeten Stahls bei der Aufbringung von Molybdän/Stahl-Beschichtungen auf Aluminium als günstig herausgestellt. Diese Kriterien sind im Anspruch 19 wiedergegeben. Erfindungsgemäß ist Grußeisen wenig geeignet, d. h. solche Eisen-Kohlenstoff-Legierungen mit einem Kohlenstoffgehalt von 2 bis 4 %. Besser geeignet sind Stähle mit weniger als 2,1 %, die schmiedbar sind. Prinzipiell sind solche Stähle aus der GB 2 050 434 A in Verbindung mit Molybdän bekannt, wobei dort jedoch mit einer solchen Mischung auf Eisensubstraten sehr schlechte Ergebnisse erzielt werden. Überraschenderweise zeichnen sich solche Stähle auf Aluminium besonders gut aus. Des weiteren haben die erfindungsgemäß eingesetzten Stähle einen Chromgehalt, der vorteilhaft nicht über 15 % liegt. Ein Mindesteinsatz von Chrom ist jedoch besonders günstig, da hierdurch eine für die Verspritzung mit Molybdän zusammen geeignete Härte des Stahls erreicht wird. Der Chromgehalt ist im wesentlichen durch die Austenitbildung begrenzt, die den Stahl für den erfindungsgemäßen Einsatz wenig geeignet macht. Auch der Einsatz von Silicium ist erfindungsgemäß günstig, wobei hier geringe Mengen ausreichend sind. Silicium senkt den Schmelzpunkt des Stahls vorteilhaft, so daß er besonders gut mit dem Molybdän zusammen plasmaverspritzt werden kann. Siliciumwerte über 2 Gewichtsprozent führen jedoch zu einer Versprödung des Stahls. Auch der Einsatz von Molybdän als Legierungsbestandteil im Stahl sowie der Einsatz von Wolfram ist günstig, wobei die Obergrenze im wesentlichen durch die hierdurch zunehmend die Härte des Stahls und den Preis des Legierungsbestandteils bestimmt ist. Grundsätzlich sind diese Elemente jedoch schon in einem deutlichen Prozentsatz als Legierungsbestandteile enthalten. Des weiteren kommt erfindungsgemäß vorteilhaft ein Stahl mit einer Alpha-Fe-Matrix zum Einsatz, in der feine Karbide im submikroskopischen Bereich enthalten sind. Solche Stähle eignen sich insbesondere zum Verspritzen mit Molybdän.

Vorteilhaft enthält der Stahl neben C noch mindestens eines und vorzugsweise mindestens zwei der folgenden Elemente, bevorzugt in der Reihenfolge: Cr, Si, Mo, W, Mn, B.

Bestimmte Legierungsbestandteile sind in dem Stahl vorzugsweise nicht oder nur gering enthalten, wie beispielsweise Bor, Nickel, Mangan und Phosphor bzw. Schwefel. Mangan eignet sich hierbei als Karbidstabilisator und Bor auch als Karbidbildener, wobei Bor in größeren Gehalten zu einer Härtung und Versprödung des Stahls führt. Kleine Mengen können jedoch sinnvoll sein, um den Schmelzpunkt des Stahls zu senken. Nickel als duktiler Werkstoff ist vorzugsweise gar nicht enthalten, obwohl Nickel grundsätzlich als ein günstiger Legierungsbestandteil im Stahl angesehen wird. Auch der Gehalt an Phosphor und Schwefel wird vorzugsweise niedrig gehalten, um eine Versprödung des Stahls zu verhindern.

Mit der Erfindung lassen sich umweltfreundlich besonders fest Gleitschichten an den Wandungen von Zylinderbohrungen einer Brennkraftmaschine aus einem Aluminiummotorblock erstellen. Diese Gleitbeschichtungen lassen sich in einem Beschichtungsschritt auftragen und bedürfen einer nur geringen Nachbehandlung (Honen), wobei insbesondere weder galvanische noch sonstige umweltproblematischen Verfahren zum Einsatz kommen.

Weitere Vorteile der Erfindung ergeben sich aus dem nachfolgend anhand einer Zeichnung näher erläuterten Ausführungsbeispiel.

Es zeigen:
- Figur 1:: den schematischen Aufbau einer Plasmaspritzschicht auf einem Werkstück,
- Figur 2:: schematisch ein kommunizierendes System ohne hydrodynamische Schmierung auf einer Werkstückoberfläche nach dem Stand der Technik,
- Figur 3:: eine schematische Ansicht ähnlich Figur 2 eines Microdruckkammersystems der Erfindung,
- Figur 4:: die Haftfestigkeit einer Plasmaschicht in Abhängigkeit von Mittenrauhwerten,
- Figur 5:: die Schichthärte in Abhängigkeit der Schichtzusammensetzung,

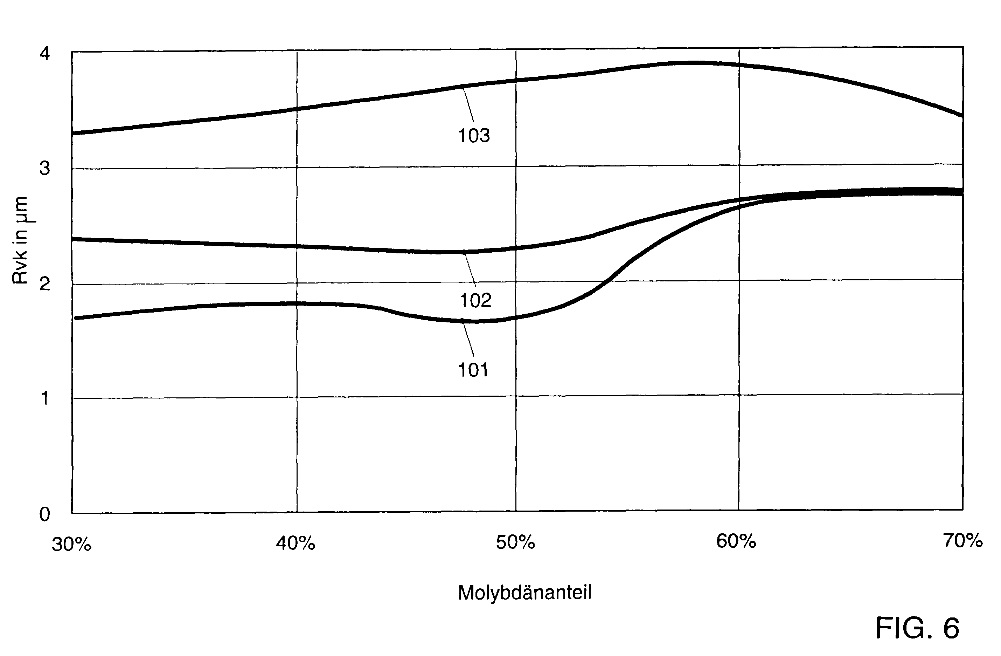

- Figur 6:: die reduzierte Riefentiefe und

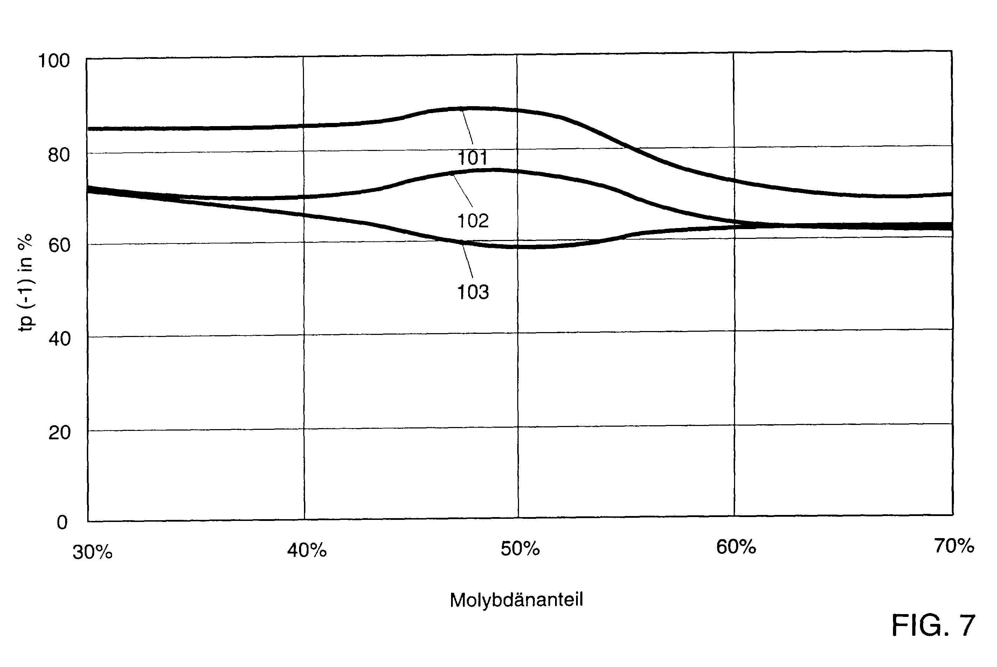

- Figur 7:: den Traganteil in 1 µm Tiefe.

Als metallisches Werkstück 1, auf welchem eine eine hydrodynamische Schmierung gewährleistende Gleitfläche 2 hergestellt werden soll, wird eine Zylinderlaufbahn eines Zylinderkurbelgehäuses einer Brennkraftmaschine angenommen. Dieses Kurbelgehäuse wird aus einem Aluminiumwerkstoff im Druckgußverfahren hergestellt, wobei als Gußwerkstoff AlSi₆Cu₄ verwendet wird.

Um auf den Zylinderlaufbahnen eine den Betriebsbedingungen entsprechende Schicht aufzubringen, wird auf das Werkstück 1 mittels Plasmaspritzen eine Verschleißschicht 3 aufgebracht.

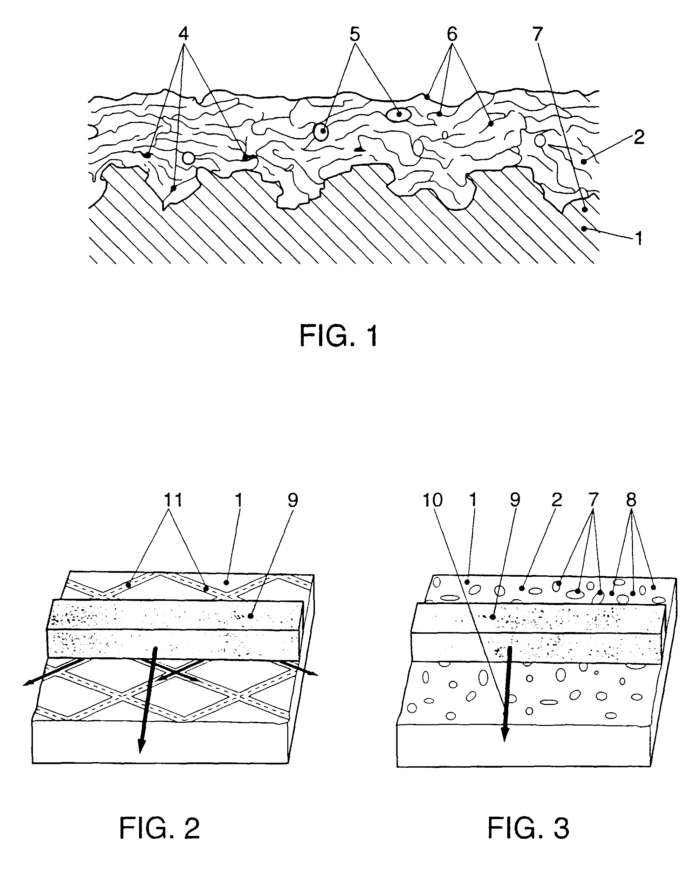

Figur 1 zeigt in starker Vergrößerung und schematisiert einen Querschnitt durch ein Werkstück 1 mit aufgebrachter Verschleißschicht 3. Erkennbar ist die Verschleißschicht 3 durch mechanische Verklammerung am Werkstück 1 gehalten, da die Spritzpartikel der Verschleißschicht im flüssigen Zustand in die Unebenheiten und Hinterschneidungen der Werkstückoberfläche eindringen. An diesen Stellen entstehen beim Erstarren der Verschleißschicht formschlüssige Verbindungen. Zusätzlich bauen sich innerhalb der Verschleißschicht 3 Schrumpfspannungen auf, welche zu kraftflüssigen Verbindungen zwischen Werkstück 1 und Verschleißschicht 3 führen.

In der Verschleißschicht 3 sind sowohl Verunreinigungen 4 wie auch unaufgeschmolzene Spritzpartikel 5 enthalten, während bei 6 vergleichsweise dünne Oxidschichten dargestellt sind.
Die für die Verschleißschicht 3 verwendeten Spritzpulver bestehen aus einem bestimmten Volumenprozentanteil aus einem Molybdänpulver, der Rest wird aus einem Stahlpulver gebildet. Dieses kann beispielsweise aus Eisen, Molybdän, Chrom, Nickel, Silicium und Bor gebildet sein, welches ein insgesamt sehr hartes Stahlpulver ergibt. Alternativ hierzu kann ein legierter Werkzeugstahl, bestehend aus Eisen, Molybdän, Wolfram und Chrom, verwendet werden. Ebenso ist die Verwendung eines niedrig legierten Stahles, beispielsweise auf der Basis von Eisen, Chrom, Mangan und Kohlenstoff, möglich.

Die Verschleißschicht kann aus einem Spritzpulver mit 20 - 60 % Molybdänpulveranteil und einem dementsprechenden Stahlpulveranteil bestehen, besonders gute Ergebnisse wurden mit einem 30 - 50 % Molybdänpulveranteil und dementsprechend 70 - 50 % Stahlpulveranteil aus einem legierten Werkzeugstahl erzielt. Ein mögliches Optimum, welches u. a. vom Honverfahren und der zu erzielenden Rauhtiefe abhängt, wurde bei jeweils 50 % Pulveranteilen ermittelt.

Nach dem Erstarren der Verschleißschicht 3 kann durch eine mechanische Bearbeitung in Form von Honen, wie es beispielsweise aus der genannten DE-44 40 713 A1 bekannt ist, diese Verschleißschicht 3 auf ein gewünschtes Endmaß abgetragen werden. Vorteilhafterweise reißen bei diesem Honvorgang die vergleichsweise harten, unaufgeschmolzenen Spritzpartikel aus der Oberfläche aus, wodurch vereinzelte Schmiertaschen 7 in Form von Vertiefungen freigelegt werden.

Vorteilhafterweise bildet die Gesamtheit dieser einzelnen Schmiertaschen 7 ein Microdruckkammersystem auf der Gleitfläche 2, welches zwischen diesen Schmiertaschen 7 Plateaus 8 mit äußerst geringer Rauhtiefe aufweist. Weitere Verfahrensschritte, etwa Fluidstrahlen zum Freilegen von durch die mechanische Bearbeitung zugeschmierten Schmiertaschen ist nicht erforderlich.

Figur 3 zeigt einen Ausschnitt aus einer Zylinderlaufbahn eines Werkstückes 1, mit der Gleitfläche 2 und dem durch die Schmiertaschen 7 mit den dazwischen liegenden Plateaus 8 gebildeten Microdruckkammersystem. Schematisch ist ein Kolbenringsegment 9 mit seiner Bewegungsrichtung 10 dargestellt, welches im Betrieb der Brennkraftmaschine relativ zu der Gleitfläche 2 bewegt wird.
Das in den Schmiertaschen 7 angesammelte Schmieröl gewährleistet durch das Aufschwimmen des Kolbenringsegmentes 9 eine hydrodynamische Schmierung.

Im Gegensatz dazu zeigt Figur 2 ein offenes, kommunizierendes System nach dem Stand der Technik. Erkennbar sind die durch die Honbearbeitung entstehenden, kreuzenden Riefen 11, in welchen das Schmieröl durch die Bewegung des Kolbenringsegmentes 9 in Richtung der eingezeichneten Pfeile vor diesen Kolbenringen hergeschoben wird. Hierdurch kann kein hydrodynamischer Druck aufgebaut werden und an den Riefenkanten ist eine Mischreibung zwischen Kolbenringen und Zylinderlaufbahnen möglich.

Bei geeigneter Abstimmung der Verfahrensparameter, insbesondere der Zusammensetzung der Verschleißschicht 3 sowie des Honabtrages, ist es durch das erfindungsgemäße Verfahren möglich, mit vergleichsweise wenigen und einfachen Verfahrensschritten ein Microdruckkammersystem zur Gewährleistung einer hydrodynamischen Schmierung zu erzeugen. Insbesondere die Zusammensetzung der aufgespritzten Verschleißschicht hat direkte Auswirkungen auf die entstehende Härte der Gleitfläche; der Honabtrag kann beispielsweise mit steigendem Molybdänpulveranteil gesteigert werden.

Der spezifische Honabtrag, das heißt das Verhältnis aus gemessenem Abtrag beim Fertighonen und dafür benötigter Zeit, war bei allen verwendeten Spritzschichten hoch genug, um innerhalb der vorgegebenen Taktzeiten bei der Fertigung eines Zylinderkurbelgehäuses die Honbearbeitung zu gewährleisten.

Für die Molybdänkomponente kann grundsätzlich ein Molybdän zum Einsatz kommen, wie es in der US 2,588,422 beschrieben ist; d. h. mit bis zu ca. 40 % Legierungsbestandteilen. Vorzugsweise kommt jedoch ein Molybdän mit mindestens 90 Gewichtsprozent Molybdängehalt zum Einsatz und insbesondere ein Molybdän, dessen Beimengungen je Einzelkomponente ≤ 1 % sind, wobei der Molybdängehalt vorzugsweise über 95 % liegt. Das Molybdän kann beispielsweise eine kantige Morphologie aufweisen.

Der Stahl hat vorteilhaft eine kugelige Morphologie, wie man sie durch Verdüsung erhält. Als Stahlkomponente kommt vorzugsweise ein legierter Stahl (101) mit ca. 4 % Cr, 5 % Mo, 1 % Si, 0,9 % C und 6 % W (Rest immer Fe) zum Einsatz, der mit einem hochlegierten Stahl (102) und einem sehr niedrig legierten Stahl (103) verglichen wird. Der hochlegierte Stahl 102 enthält ca. 5 % Cr, über 2,1 % C, 2 % Si, 30 % Mo und 0, 5 % B; der niedrig legierte Stahl 103 enthält ca. 1,5 % Cr, 1,1 % C und 1,3 % Mn. Der Stahl hat vorteilhaft eine kugelige Morphologie, wie man sie durch Verdüsung erhält.

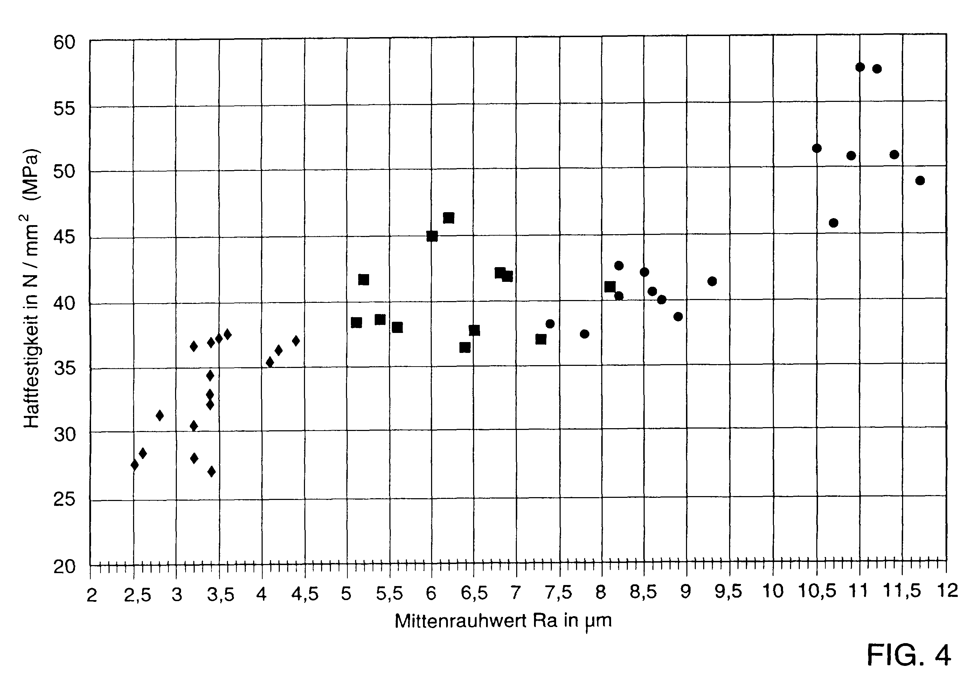

Mit dem ersten (besonders geeigneten) Stahl 101 wird der Einfluß des Mittenrauhwertes Ra auf die Haftfestigkeit der Beschichtung untersucht, wobei eine 50/50 Mischung mit Molybdän (≥ 98 %) zum Einsatz kommt. Das Ergebnis ist in Figur 4 dargestellt, aus der ersichtlich ist, daß oberhalb Ra ≥ 4 µm ausschließlich hohe Haftfestigkeiten der Beschichtung auf dem Aluminiumsubstrat erreicht werden, wohingegen unterhalb dieses Wertes eine breite Streuung zu geringen Haftfestigkeiten vorliegt.

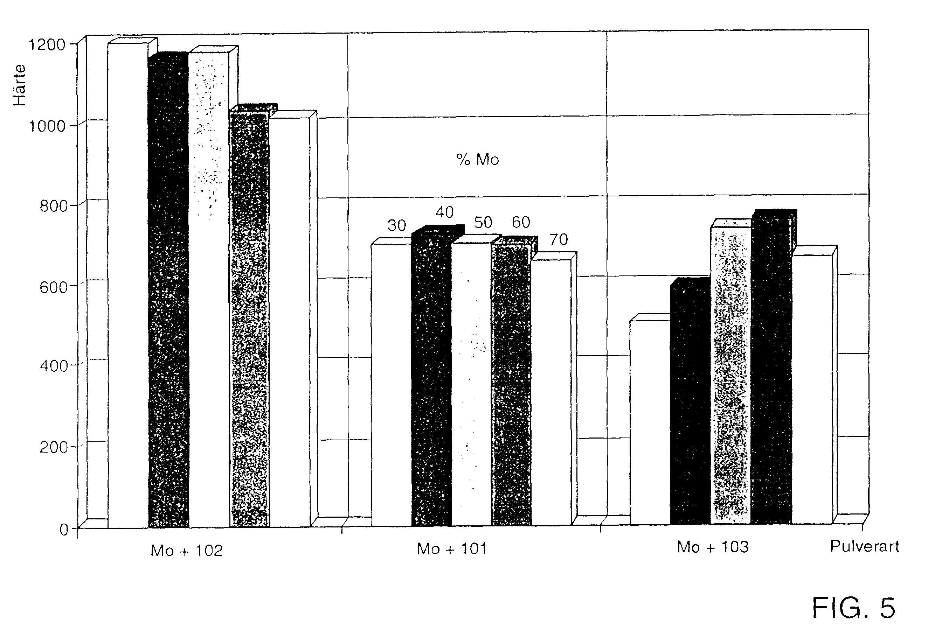

Als nächstes werden vergleichende Härtemessungen durchgeführt, wobei die Härteprüfungen direkt auf den gehonten Spritzschichtoberflächen mit einer Prüflast von HV 0,05 durchgeführt wird (Kleinlasthärteprüfung nach Vickers). Die Prüfflächen werden jeweils 10 Sekunden mit der Last beaufschlagt. Für die Prüfung werden ausreichend große Plateaus gesucht, damit die Ergebnisse nicht durch Poren verfälscht werden. Die Härtewerte können, schon wegen der geringen Prüflast, nur vergleichend betrachtet werden, da eine DIN-normgerechte Härtemessung aufgrund der porösen und sehr dünnen Schichtdicke kaum möglich ist. Für jede zu prüfende Oberfläche werden fünf Einzelmessungen durchgeführt und hieraus der Mittelwert errechnet. Aus Figur 5 ist ersichtlich, daß die Plasmaspritzschichten Mo/Stahl 102 am härtesten sind, wobei mit zunehmendem Molybdängehalt große Härteschwankungen vorliegen. Mit dem erfindungsgemäß besten Stahl 101 werden nur geringe Härteschwankungen erhalten, wohingegen mit dem niedrig legierten Stahl 103 die geringsten Härtewerte bei wiederum starken Härteschwankungen in Abhängigkeit des Molybdänanteils erhalten werden. Es hat sich herausgestellt, daß Stähle, die zu geringen Härteschwankungen in Abhängigkeit des Molybdängehaltes im Spritzpulver führen, zur Beschichtung von Zylinderlaufflächen in Aluminium-Motorblöcken am geeignetsten sind. Ebenso sind Beschichtungen in einem mittleren Härtebereich HV 0,05 besonders geeignet.

Die gehonten Plasmaspritzschichten wurden außerdem hinsichtlich ihrer Rauhheitsprofile untersucht, woraus sich Rückschlüsse auf die Honbarkeit und die Eignung zum Einsatz in Brennkraftmaschinen ziehen lassen. Beispielhaft seien hier die reduzierte Riefentiefe und der Traganteil wiedergegeben. Die Rauhheitsmessungen wurden mit einem Perthometer S8P5.6 durchgeführt. Pro innenbeschichtetem Zylinder wurden drei Meßschriebe (bei drei Zylindern) angefertigt. Besonders günstige Werte für die reduzierte Riefentiefe liegen bei ein bis zwei µ-Meter, die mit dem Stahl 101 problemlos erreicht werden. Die Traganteile dienen der Abstützung des Kolbens und der Kolbenringe und sollten möglichst groß sein. Hier wurden die höchsten Werte wiederum mit dem Stahl 101 erreicht.

## Patentansprüche

1. Verfahren zum Herstellen einer Gleitfläche auf einem Körper durch thermisches Spritzen einer Beschichtung aus Stahl, Molybdän und ggf. weiteren Komponenten, dadurch gekennzeichnet, daß eine Mischung aus
10 bis 70 Gew.-% Molybdän oder Molybdänlegierung mit bis zu 40 Gew.-% Legierungsbestandteilen
90 bis 30 Gew.-% eines Stahls mit mind. 50 Gew.-% α-Fe-Matrix sowie >0,8 bis 2,1 Gew.-% C und/oder 1,0 bis 15 Gew.-% Cr
0 bis <50 Gew.-% einer oder mehrerer weiterer Komponenten
zur Bildung der die Gleitfläche aufweisenden Beschichtung auf den Körper gespritzt wird, und daß der Stahl mindestens eines der folgenden Kriterien erfüllt:
- der Stahl hat als solcher thermisch gespritzt eine Härte von 300 bis 500 HV 0,3;
- der Stahl hat als solcher vor dem thermischen Spritzen eine Härte von 300 bis 450 HV 0,3 (weichgeglüht);
- der Stahl hat eine Härte, die so gewählt ist, daß eine thermisch gespritzte Mischung aus 30 Gew.-% Molybdän und 70 Gew.-% des Stahls eine Härte von 550 bis 850 HV 0,05 hat;
- der Stahl hat eine Härte, die so gewählt ist, daß eine thermisch gespritzte Mischung aus 50 Gew.-% Molybdän und 50 Gew.-% des Stahls eine Härte von 550 bis 850 HV 0,05 hat;
- der Stahl hat eine Härte, die so gewählt ist, daß thermisch gespritzte Mischungen im Bereich 30 Gew.-% Molybdän/70Gew.-% des Stahls bis 50 Gew.-% Molybdän/50 Gew.-% des Stahls einen Härteunterschied von maximal 100 HV 0,05 und oder eine maximal 10 % höhere Härte HV 0,05 aufweisen, als die weicheste Mischung aus diesem Bereich und/oder eine um maximal +/- 10 % abweichende Härte HV 0,05 haben, bezogen auf die Mischung 30 Gew.-% Molybdän/70 Gew.-% des Stahls.

2. Verfahren nach Anspruch 1, dadurch gekennzeichnet, daß die Härte des als solcher gespritzten Stahls im Bereich 350 bis 450 HV 0,3 liegt.

3. Verfahren nach Anspruch 1 oder 2, dadurch gekennzeichnet, daß die Härte der thermisch gespritzten Mischung 30 Gew.-% Molybdän/70 Gew.-% Stahl im Bereich von 600 bis 750 HV 0,05, insbesondere 650 bis 700 HV 0,05 liegt.

4. Verfahren nach einem der vorhergehenden Ansprüche, dadurch gekennzeichnet, daß die Härte der thermisch gespritzten Mischung 50 Gew.-% Molybdän/50 Gew.-% Stahl im Bereich von 600 bis 750 HV 0,05, insbesondere 650 bis 700 HV 0,05 liegt.

5. Verfahren nach einem der vorhergehenden Ansprüche, dadurch gekennzeichnet, daß ein Stahl mit einer Härte gewählt wird, bei der thermisch gespritzte Mischungen im Bereich 30 Gew.-% Molybdän/70 Gew.-% des Stahls bis 50 Gew.-% Molybdän/50Gew.-% des Stahls in dem Härtebereich 550 bis 850HV 0,05 liegen.

6. Verfahren nach Anspruch 4 und 5, rückbezogen auf Anspruch 3, dadurch gekennzeichnet, daß die Härte im Bereich 600 bis 750 HV 0,05 und insbesondere im Bereich 650 bis 700 HV 0,05 liegt.

7. Verfahren nach einem der vorhergehenden Ansprüche, dadurch gekennzeichnet, daß der Härteunterschied für thermisch gespritzte Mischungen im Bereich 30 Gew.-% Molybdän/70 Gew.-% des Stahls bis 60 Gew.-% Molybdän/40 Gew.-% des Stahls in den Grenzen vorliegt.

8. Verfahren nach einem der vorhergehenden Ansprüche, dadurch gekennzeichnet, daß die thermisch gespritzten Mischungen im Bereich 30 Gew.-% Molybdän/70 Gew.-% des Stahls bis 50 Gew.-% Molybdän/50 Gew.-% des Stahls einen Härteunterschied von maximal 80 HV 0,05 und insbesondere maximal 50 HV 0,05 haben.

9. Verfahren nach einem der vorhergehenden Ansprüche, dadurch gekennzeichnet, daß die thermisch gespritzten Mischungen im Bereich 30 Gew.-% Molybdän/70 Gew.-% des Stahls bis 50 Gew.-% Molybdän/50 Gew.-% des Stahls eine maximal 8 % und insbesondere maximal 5 % höhere Härte HV 0,05 aufweisen, als die weicheste Mischung aus diesem Bereich.

10. Verfahren nach einem der vorhergehenden Ansprüche, dadurch gekennzeichnet, daß die thermisch gespritzten Mischungen im Bereich 30 Gew.-% Molybdän/70 Gew.-% des Stahls bis 50 Gew.-% Molybdän/50 Gew.-% des Stahls eine um maximal +/- 5 % abweichende Härte HV 0,05 haben, bezogen auf die Mischung 30 Gew.-% Molybdän/70 Gew.-% des Stahls.

11. Verfahren nach einem der vorhergehenden Ansprüche, dadurch gekennzeichnet, daß die Beschichtung
- in einer Dicke von 80 bis 350 µm und/oder
- auf eine durch einen Partikel- und/oder Fluidstrom aufgerauhte Oberfläche des Körpers und/oder
- auf eine auf einen Mittenrauhwert (Ra) von 4 bis 35 µm behandelte Oberfläche und/oder
- mit einer Porosität ≤ 10 Vol.-% und/oder
- mit überwiegend geschlossenen Poren und/oder
- mit der Mehrzahl der Poren in einem Dickenbereich > 2 bis 40 µm
aufgebracht wird.

12. Verfahren zum Herstellen einer Gleitfläche auf einem Körper durch thermisches Spritzen einer Beschichtung aus Stahl, Molybdän und ggf. weiteren Komponenten, dadurch gekennzeichnet, daß eine Mischung aus
10 bis 70 Gew.-% Molybdän oder Molybdänlegierung mit bis zu 40 Gew.-% Legierungsbestandteilen
90 bis 30 Gew.-% eines Stahls
0 bis <50 Gew.-% einer oder mehrerer weiterer Komponenten
zur Bildung der die Gleitfläche aufweisenden Beschichtung auf den Körper gespritzt wird, und daß die Beschichtung
- in einer Dicke von 80 bis 350 µm und/oder
- auf eine auf einen Mittenrauhwert (Ra) von 4 bis 35 µm behandelte Oberfläche und/oder
- mit einer Porosität ≤ 7 Vol.-% und/oder
- mit überwiegend geschlossenen Poren und/oder
- mit der Mehrzahl der Poren in einem Dickenbereich > 2 bis 40 µm
aufgebracht wird.

13. Verfahren nach Anspruch 11 oder 12, dadurch gekennzeichnet, daß die Schichtdicke 100 bis 300 µm, insbesondere ≤ 250 µm beträgt.

14. Verfahren nach einem der Ansprüche 11 bis 13, dadurch gekennzeichnet, daß die Porosität ≤ 7 Vol.-% ist.

15. Verfahren nach einem der Ansprüche 11 bis 14, dadurch gekennzeichnet, daß die Mehrzahl der Poren im Bereich 3 bis 20 µm liegt.

16. Verfahren nach einem der Ansprüche 11 bis 15, dadurch gekennzeichnet, daß die Oberfläche des Körpers mit Korund und/oder auf einen Mittelrauhwert (Ra) von 5 bis 25 µm und insbesondere 5 bis 15 µm vorbehandelt wird.

17. Verfahren nach einem der vorhergehenden Ansprüche, dadurch gekennzeichnet, daß als Körper ein Gegenstand aus einer Aluminiumlegierung, insbesondere AlSi, eingesetzt wird.

18. Verfahren nach einem der vorhergehenden Ansprüche, dadurch gekennzeichnet, daß der Stahl mindestens eines der folgenden Kriterien erfüllt:
| | | |
|---|---|---|
| C-Gehalt | 0,7 - 2,1 | Gew.% (der Minimal C-Gehalt gilt nicht für die Ansprüche 1-11), insbesondere > 0,8 bis 1,5 Gew.-% |
| Cr-Gehalt | 1,0 - 15 | Gew.-%, insbesondere 1,0 bis 5 Gew.-% |
| Si-Gehalt | 0,5 - 2 | Gew.-% |
| Mo-Gehalt | 2,5 - 50 | Gew.-%, insbesondere 3 bis 15 Gew.-% |
| W-Gehalt | 2,5 - 30 | Gew.-%, insbesondere 3 bis 15 Gew.-% |
| Mo + W-Gehalt | 2,5 - 50 | Gew.-%, insbesondere 3 bis 25 Gew.-% |
α-Fe-Matrix mindestens 50 Gew.-%, insbesondere mindestens 70 Gew.-% des Fe feine Cr, Mo, W u/o Mn-Carbide (≤ 1 µm) in einer α-Fe-Matrix
| | | |
|---|---|---|
| B-Gehalt | bis 1 | Gew.-% |
| Ni-Gehalt | bis 0,5 | Gew.-%, insbesondere bis 0,3 Gew.-% |
| Mn-Gehalt | bis 4 | Gew.-% |
| P-Gehalt | bis 0,5 | Gew.-%, insbesondere bis 0,2 Gew.-% |
| S-Gehalt | bis 0,5 | Gew.-%, insbesondere bis 0,2 Gew.-%. |

19. Verfahren zum Herstellen einer Gleitfläche auf einer Aluminiumlegierung durch thermisches Spritzen einer Beschichtung aus Stahl, Molybdän und ggf. weiteren Komponenten, dadurch gekennzeichnet, daß eine Mischung aus
10 bis 70 Gew.-% Molybdän oder Molybdänlegierung mit bis zu 40 Gew.-% Legierungsbestandteilen
90 bis 30 Gew.-% eines Stahls
0 bis <50 Gew.-% einer oder mehrerer weiterer Komponenten
zur Bildung der die Gleitfläche aufweisenden Beschichtung auf die Aluminiumlegierung gespritzt wird, und daß der Stahl mindestens eines der folgenden Kriterien erfüllt:
| | | |
|---|---|---|
| C-Gehalt | 0,7 - 2,1 | Gew.-%, insbesondere > 0,8 bis 1,5 Gew.-% |
| Cr-Gehalt | 1,0 - 15 | Gew.-%, insbesondere 1,0 bis 5 Gew.-% |
| Si-Gehalt | 0,5 - 2 | Gew.-% |
| Mo-Gehalt | 2,5 - 50 | Gew.-%, insbesondere 3 bis 15 Gew.-% |
| W-Gehalt | 2,5 - 30 | Gew.-%, insbesondere 3 bis 15 Gew.-% |
| Mo + W-Gehalt | 2,5 - 50 | Gew.-%, insbesondere 3 bis 25 Gew.-%. |
α-Fe-Matrix mindestens 50 Gew.-%, insbesondere mindestens 70 Gew.-% des Fe feine Cr, Mo, W u/o Mn-Carbide (≤ 1 µm) in einer α-Fe-Matrix

20. Verfahren nach Anspruch 19, dadurch gekennzeichnet, daß der Stahl ferner enthalten kann:
| | | |
|---|---|---|
| B-Gehalt | bis 1 | Gew.-% |
| Ni-Gehalt | bis 0,5 | Gew.-%, insbesondere bis 0,3 Gew.-% |
| Mn-Gehalt | bis 4 | Gew.-% |
| P-Gehalt | bis 0,5 | Gew.-%, insbesondere bis 0,2 Gew.-% |
| S-Gehalt | bis 0,5 | Gew.-%, insbesondere bis 0,2 Gew.-%. |

21. Verfahren nach einem der vorhergehenden Ansprüche, dadurch gekennzeichnet, daß Zylinderlaufflächen einer Verbrennungskraftmaschine beschichtet werden.

22. Verfahren nach einem der vorhergehenden Ansprüche, dadurch gekennzeichnet, daß ein Aluminiummotorblock beschichtet wird.

23. Verfahren nach einem der vorhergehenden Ansprüche, dadurch gekennzeichnet, daß die Beschichtung zum Teil wieder abgetragen wird, insbesondere mechanisch.

24. Hubkolbenmaschine, insbesondere Verbrennungskraftmaschine, mit einem Kurbelgehäuse aus einer Aluminiumlegierung, das Zylinderlaufbahnen aufweist, die mit einer Stahl-Molybdän-Beschichtung versehen sind, die durch thermische Spritzen aufgebracht ist, dadurch gekennzeichnet, daß die die Zylinderlaufbahn bildende Stahl-Molybdän-Beschichtung durch thermisches Spritzen einer Mischung aus
10 bis 70 Gew.-% Molybdän oder Molybdänlegierung mit bis zu 40 Gew.-% Legierungsbestandteilen
90 bis 30 Gew.-% eines Stahls
0 bis <50 Gew.-% einer oder mehrerer weiterer Komponenten
auf die Aluminiumlegierung aufgebracht ist, und daß der Stahl mindestens eines der folgenden Kriterien erfüllt:
- der Stahl hat als solcher thermisch gespritzt eine Härte von 300 bis 500 HV 0,3;
- der Stahl hat als solcher vor dem thermischen Spritzen eine Härte von 300 bis 450 HV 0,3 (weichgeglüht);
- der Stahl hat eine Härte, die so gewählt ist, daß eine thermisch gespritzte Mischung aus 30 Gew.-% Molybdän und 70 Gew.-% des Stahls eine Härte von 550 bis 850 HV 0,05 hat;
- der Stahl hat eine Härte, die so gewählt ist, daß eine thermisch gespritzte Mischung aus 50 Gew.-% Molybdän und 50 Gew.-% des Stahls eine Härte von 550 bis 850 HV 0,05 hat;
- der Stahl hat eine Härte, die so gewählt ist, daß thermisch gespritzte Mischungen im Bereich 30 Gew.-% Molybdän/70Gew.-% des Stahls bis 50 Gew.-% Molybdän/50 Gew.-% des Stahls einen Härteunterschied von maximal 100 HV 0,05 und oder eine maximal 10 % höhere Härte HV 0,05 aufweisen, als die weicheste Mischung aus diesem Bereich und/oder eine um maximal +/- 10 % abweichende Härte HV 0,05 haben, bezogen auf die Mischung 30 Gew.-% Molybdän/70 Gew.-% des Stahls,
- C-Gehalt 0,7 - 2,1 Gew.-%, insbesondere > 0,8 bis 1,5 Gew.-%
- Cr-Gehalt 1,0 - 15 Gew.-%, insbesondere 1,0 bis 5 Gew.-%
- Si-Gehalt 0,5 - 2 Gew.-%
- Mo-Gehalt 2,5 - 50 Gew.-%, insbesondere 3 bis 15 Gew.-%
- W-Gehalt 2,5 - 30 Gew.-%, insbesondere 3 bis 15 Gew.-%
- Mo + W-Gehalt 2,5 - 50 Gew.-%, insbesondere 3 bis 25 Gew.-%
- α-Fe-Matrix mindestens 50 Gew.-%, insbesondere mindestens 70 Gew.-% des Fe
- feine Cr, Mo, W u/o Mn-Carbide (≤ 1 µm) in einer α-Fe-Matrix
und/oder daß die Beschichtung
- in einer Dicke von 80 bis 350 µm und/oder
- auf eine durch einen Partikel- und/oder Fluidstrom aufgerauhte Oberfläche des Körpers und/oder
- auf eine auf einen Mittenrauhwert (Ra) von 4 bis 35 µm behandelte Oberfläche und/oder
- mit einer Porosität ≤ 10 Vol.-% und/oder
- mit überwiegend geschlossenen Poren und/oder
- mit der Mehrzahl der Poren in einem Dickenbereich > 2 bis 40 µm
aufgebracht ist.

## Claims

1. Method of producing a sliding surface on a body by means of thermal spraying a coating consisting of steel, molybdenum and if necessary other components, characterised in that a mixture of:
10 to 70 %.wt molybdenum or molybdenum alloy comprising up to 40 %.wt alloy components,
90 to 30 %.wt of a steel comprising at least 50 %.wt α-Fe-matrix and >0.8 to 2.1 %.wt C and/or 1.0 to 15 %.wt Cr,
0 to <50 %.wt of one or several other components
are sprayed onto the body to form the coating comprising the sliding surface and that the steel fulfills at least one of the following criteria:
- the thermal sprayed steel has as such a hardness of 300 to 500 HV 0.3;
- the steel prior to the thermal spraying process has as such a hardness of 300 to 450 HV 0.3 (soft-annealed);
- the steel has a hardness which is such that a thermal sprayed mixture of 30 %.wt molybdenum and 70 %.wt of the steel has a hardness of 550 to 850 HV 0.05;
- the steel has a hardness which is such that a thermal sprayed mixture consisting of 50 %.wt molybdenum and 50 %.wt of steel has a hardness of 550 to 850 HV 0.05;
- the steel has a hardness which is such that thermal sprayed mixtures in the range of 30 %.wt molybdenum/70 %.wt of steel up to 50 %.wt molybdenum/50 %.wt of the steel have a hardness difference of a maximum 100 HV 0.05 and or a maximum 10% higher hardness HV 0.05 than the softest mixture in this range and/or a hardness HV 0.05 which differs by a maximum +/- 10% based on the mixture 30 %.wt molybdenum/70 %.wt of the steel.

2. Method according to claim 1, characterised in that the hardness of such sprayed steel lies in the range of 350 to 450 HV 0.3.

3. Method according to claim 1 or 2, characterised in that the hardness of the thermal sprayed mixture 30 %.wt molybdenum/70 %.wt steel lies in the range of 600 to 750 HV 0.05, more specifically 650 to 700 HV 0.05.

4. Method according to any one of the preceding claims, characterised in that the hardness of the thermal sprayed mixture 50 %.wt molybdenum/50 %.wt steel lies in the range of 600 to 750 HV 0.05, more specifically 650 to 700 HV 0.05.

5. Method according to any one of the preceding claims, characterised in that a steel is selected having a hardness at which thermal sprayed mixtures in the range of 30 %.wt molybdenum/70 %.wt of the steel to 50 %.wt molybdenum/50 %.wt of the steel lie in the hardness range 550 to 850 HV 0.05.

6. Method according to claim 4 and 5, when dependent upon claim 3, characterised in that the hardness lies in the range of 600 to 750 HV 0.05 and more specifically in the range 650 to 700 HV 0.05.

7. Method according to any one of the preceding claims, characterised in that the hardness difference for the thermal sprayed mixtures in the range of 30 %.wt molybdenum/70 %.wt of the steel to 60 %.wt molybdenum/40 %.wt of the steel lies within the limits.

8. Method according to any one of the preceding claims, characterised in that the thermal sprayed mixtures in the range of 30 %.wt molybdenum/70 %.wt of the steel to 50 %.wt molybdenum/50 %.wt of the steel have a hardness difference of a maximum 80 HV 0.05 and more specifically a maximum 50 HV 0.05.

9. Method according to any one of the preceding claims, characterised in that the thermal sprayed mixtures in the range of 30 %.wt molybdenum/70 %.wt of the steel to 50 %.wt molybdenum/50 %.wt of the steel have a maximum 8 % and more specifically a maximum 5 % higher hardness HV 0.05 than the softest mixture in this range.

10. Method according to any one of the preceding claims, characterised in that the thermal sprayed mixtures in the range of 30 %.wt molybdenum/70 %.wt of the steel up to 50 %.wt molybdenum/50 %.wt of the steel have a hardness HV 0.05 which differs by a maximum +/- 5 % based on the mixture 30 %.wt molybdenum/70 %.wt of the steel.

11. Method according to any one of the preceding claims, characterised in that the coating is applied:
- in a thickness of 80 to 350 µm and/or
- on a surface of the body, which surface is roughened by a particle flow and/or a fluid flow and/or
- on a surface which has been treated to an average roughness value (Ra) of 4 to 35 µm and/or
- with a porosity ≤ 10 %.vol and/or
- with predominantly closed pores and/or
- with the majority of the pores in a thickness range > 2 to 40 µm.

12. Method of producing a sliding surface on a body by thermal spraying a coating consisting of steel, molybdenum and if necessary other components, characterised in that a mixture consisting of:
10 to 70 %.wt molybdenum or molybdenum alloy comprising up to 40 %.wt alloy components,
90 to 30 %.wt of a steel,
0 to <50 %.wt of one or several other components
is sprayed onto the body to form the coating comprising the sliding surface and that the coating is applied:
- in a thickness of 80 to 350 µm and/or
- on a surface which has been treated to an average roughness value (Ra) of 4 to 35 µm and/or
- with a porosity ≤ 7 %.vol and/or
- with predominantly closed pores and/or
- with the majority of the pores in a thickness range > 2 to 40 µm.

13. Method according to claim 11 or 12, characterised in that the layer thickness amounts to 100 to 300 µm, more specifically ≤250 µm.

14. Method according to any one of claims 11 to 13, characterised in that the porosity is ≤ 7 %.vol.

15. Method according to any one of claims 11 to 14, characterised in that the majority of the pores lie in the range 3 to 20 µm.

16. Method according to any one of claims 11 to 15, characterised in that the surface of the body is first treated with corundum and/or to an average roughness value (Ra) of 5 to 25 µm and more specifically 5 to 15 µm.

17. Method according to any one of the preceding claims, characterised in that the object used as the body consists of an aluminium alloy, more specifically AlSi.

18. Method according to any one of the preceding claims, characterised in that the steel fulfills at least one of the following criteria:
| | | |
|---|---|---|
| C-content | 0.7 - 2.1 | %.wt, (the minimum C-content does not apply for the claims 1 - 11), more specifically > 0.8 to 1.5 %.wt |
| Cr-content | 1.0 - 15 | %.wt, more specifically 1.0 to 5 %.wt |
| Si-content | 0.5 - 2 | %.wt |
| Mo-content | 2.5 - 50 | %.wt, more specifically 3 to 15 %.wt |
| W-content | 2.5 - 30 | %.wt, more specifically 3 to 15 %.wt |
| Mo + W-content | 2.5 - 50 | %.wt, more specifically 3 to 25 %.wt |
α-Fe-matrix at least 50 %.wt, more specifically at least 70 %.wt of the Fe fine Cr, Mo, W and/or Mn-carbides (≤ 1 µm) in an α-Fe-matrix
| | | |
|---|---|---|
| B-content | up to 1 | %.wt |
| Ni-content | up to 0.5 | %.wt, more specifically up to 0.3 %.wt |
| Mn-content | up to 4 | %.wt |
| P-content | up to 0.5 | %.wt, more specifically up to 0.2 %.wt |
| S-content | up to 0.5 | %.wt, more specifically up to 0.2 %.wt |

19. Method of producing a sliding surface on an aluminium alloy by means of thermal spraying of a coating consisting of steel, molybdenum and if necessary other components, characterised in that a mixture consisting of:
10 to 70 %.wt molybdenum or molybdenum alloy comprising up to 40 %.wt alloy components,
90 to 30 %.wt of a steel,
0 to <50 %.wt of one or several other components
is sprayed onto the aluminium alloy to form the coating comprising the sliding surface and that the steel fulfills at least one of the following criteria:
| | | |
|---|---|---|
| C-content | 0.7 - 2.1 | %.wt, more specifically > 0.8 to 1.5 %.wt |
| Cr-content | 1.0 - 15 | %.wt, more specifically 1.0 to 5 %.wt |
| Si-content | 0.5 - 2 | %.wt |
| Mo-content | 2.5 - 50 | %.wt, more specifically 3 to 15 %.wt |
| W-content | 2.5 - 30 | %.wt, more specifically 3 to 15 %.wt |
| Mo + W-content | 2.5 - 50 | %.wt, more specifically 3 to 25 %.wt |
α-Fe-matrix at least 50 %.wt, more specifically at least 70 %.wt of the Fe fine Cr, Mo, W and/or Mn-carbides (≤ 1 µm) in an α-Fe-matrix

20. Method according to claim 19, characterised in that the steel can moreover contain:
| | | |
|---|---|---|
| B-content | up to 1 | %.wt |
| Ni-content | up to 0.5 | %.wt, more specifically up to 0.3 %.wt |
| Mn-content | up to 4 | %.wt |
| P-content | up to 0.5 | %.wt, more specifically up to 0.2 %.wt |
| S-content | up to 0.5 | %.wt, more specifically up to 0.2 %.wt |

21. Method according to any one of the preceding claims, characterised in that the cylinder running surfaces of a internal combustion engine are coated.

22. Method according to any one of the preceding claims, characterised in that an aluminium engine block is coated.

23. Method according to any one of the preceding claims, characterised in that the coating is partly removed again, more specifically in a mechanical manner.

24. Piston stroke engine, more specifically an internal combustion engine, comprising a crankcase formed from an aluminium alloy, which crankcase comprises cylinder running tracks which are provided with a steel-molybdenum coating which is applied by means of a thermal spraying process, characterised in that the steel-molybdenum coating forming the cylinder running track is applied to the aluminium alloy by means of thermal spraying of a mixture consisting of :
10 to 70 %.wt molybdenum or molybdenum alloy comprising up to 40 %.wt alloy components,
90 to 30 %.wt of a steel
0 to <50 %.wt of one or several other components
and that the steel fulfills at least one of the following criteria:
- the thermal sprayed steel has as such a hardness of 300 to 500 HV 0.3;
- the steel prior to the thermal spraying process has as such a hardness of 300 to 450 HV 0.3 (soft-annealed);
- the steel has a hardness which is such that a thermal sprayed mixture of 30 %.wt molybdenum and 70 %.wt of the steel has a hardness of 550 to 850 HV 0.05;
- the steel has a hardness which is such that a thermal sprayed mixture consisting of 50 %.wt molybdenum and 50 %.wt of steel has a hardness of 550 to 850 HV 0.05;
- the steel has a hardness which is such that thermal sprayed mixtures in the range of 30 %.wt molybdenum/70 %.wt of steel up to 50 %.wt molybdenum/50 %.wt of the steel have a hardness difference of a maximum 100 HV 0.05 or a maximum 10% higher hardness HV 0.05 than the softest mixture from this range and/or a hardness HV 0.05 which differs by a maximum +/- 10%, based on the mixture 30 %.wt molybdenum/70 %.wt of the steel,
| | | |
|---|---|---|
| C-content | 0.7 - 2.1 | %.wt, more specifically > 0.8 to 1.5 %.wt |
| Cr-content | 1.0 - 15 | %.wt, more specifically 1.0 to 5 %.wt |
| Si-content | 0.5 - 2 | %.wt |
| Mo-content | 2.5 - 50 | %.wt, more specifically 3 to 15 %.wt |
| W-content | 2.5 - 30 | %.wt, more specifically 3 to 15 %.wt |
| Mo + W-content | 2.5 - 50 | %.wt, more specifically 3 to 25 %.wt |
α-Fe-matrix at least 50 %.wt, more specifically at least 70 %.wt of the Fe fine Cr, Mo, W and/or Mn-carbides (≤ 1 µm) in an α-Fe-matrix
and/or that the coating is applied:
- in a thickness of 80 to 350 µm and/or
- on a surface of the body, which surface has been roughened by a particle flow and/or fluid flow and/or
- on a surface which has been treated to an average roughness value (Ra) of 4 to 35 µm and/or
- with a porosity ≤ 10 %.vol and/or
- with predominantly closed pores and/or
- with the majority of the pores in a thickness range > 2 to 40 µm.

## Revendications

1. Procédé de fabrication d'une surface de glissement sur un corps par projection thermique d'une enduction en acier, molybdène et le cas échéant d'autres composants, caractérisé en ce qu'un mélange, qui se compose de :
10 à 70 % en poids de molybdène avec jusqu'à 40 % en poids de composants d'un alliage,
90 à 30 % en poids d'un acier avec au moins 50 % en poids d'une matrice de fer α, ainsi que > 0,8 à 2,1 % en poids de carbone et / ou 1,0 à 15 % en poids de chrome,
0 à < 50 % en poids d'un ou plusieurs autres composants
est projeté, pour former l'enduction, tournée vers la surface de glissement, sur le corps et en ce que l'acier remplit au moins l'un des critères suivants :
- l'acier a, projeté thermiquement en tant que tel, une dureté de 300 à 500 HV 0,3 ;
- l'acier a, en tant que tel, avant la projection thermique, une dureté de 300 à 450 HV 0,3 (recuit);
- l'acier a une dureté, qui est choisie de telle sorte qu'un mélange projeté thermiquement se composant de 30 % en poids de molybdène et de 70 % en poids d'acier, a une dureté de 550 à 850 HV 0,05;
- l'acier a une dureté, qui est choisie de telle sorte qu'un mélange projeté thermiquement se composant de 50 % en poids de molybdène et de 50 % en poids d'acier, a une dureté de 550 à 850 HV 0,05;
- l'acier a une dureté, qui est choisie de telle sorte que des mélanges projetés thermiquement se trouvant dans la zone de 30 % en poids de molybdène pour 70 % en poids d'acier, jusqu'à 50 % en poids de molybdène pour 50 % en poids d'acier, présentent une différence de dureté d'au maximum 100 HV 0,05 et/ou une dureté HV 0,05 au maximum plus élevée de 10 % que le mélange le plus mou provenant de cette zone, et/ou une dureté HV 0,05 qui s'en écarte au maximum de +/- 10 %, par rapport au mélange se composant de 30 % en poids de molybdène pour 70 % en poids d'acier.

2. Procédé selon la revendication 1, caractérisé en ce que la dureté de l'acier projeté en tant que tel se situe dans la zone de 350 à 450 HV 0,3.

3. Procédé selon la revendication 1 ou 2, caractérisé en ce que la dureté du mélange projeté thermiquement, qui se compose de 30 % en poids de molybdène pour 70 % en poids d'acier, se situe dans la zone de 600 à 750 HV 0,05, et en particulier de 650 à 700 HV 0,05.

4. Procédé selon l'une des revendications précédentes, caractérisé en ce que la dureté du mélange projeté thermiquement, qui se compose de 50 % en poids de molybdène pour 50 % en poids d'acier, se situe dans la zone de 600 à 750 HV 0,05, et en particulier de 650 à 700 HV 0,05.

5. Procédé selon l'une des revendications précédentes, caractérisé en ce que l'on choisit un acier avec une dureté, dans le cas de laquelle les mélanges thermiquement projetés se situent dans la zone de 30 % en poids de molybdène pour 70 % en poids d'acier jusqu'à 50 % en poids de molybdène pour 50 % en poids d'acier, dans la zone de dureté de 550 à 850 HV 0,05.

6. Procédé selon la revendication 4 et la revendication 5, se rapportant à la revendication 3, caractérisé en ce que la dureté se situe dans la zone de dureté de 600 à 750 HV 0,05 et en particulier dans la zone de 650 à 700 HV 0,05.

7. Procédé selon l'une des revendications précédentes, caractérisé en ce que la différence de dureté pour des mélanges projetés thermiquement se situe dans les limites de la zone de 30 % en poids de molybdène pour 70 % en poids d'acier jusqu'à 60 % en poids de molybdène pour 40 % en poids d'acier.

8. Procédé selon l'une des revendications précédentes, caractérisé en ce que les mélanges thermiquement projetés, qui se situent dans la zone de 30 % en poids de molybdène pour 70 % en poids d'acier jusqu'à 50 % en poids de molybdène pour 50 % en poids d'acier, ont une différence de dureté d'au maximum 80 HV 0,05 et en particulier d'au maximum 50 HV 0,05.

9. Procédé selon l'une des revendications précédentes, caractérisé en ce que les mélanges thermiquement projetés, qui se situent dans la zone de 30 % en poids de molybdène pour 70 % en poids d'acier jusqu'à 50 % en poids de molybdène pour 50 % en poids d'acier, présentent une dureté HV 0,05 supérieure d'au maximum 8 % et en particulier d'au maximum 5 %, par rapport au mélange le plus mou de cette zone.

10. Procédé selon l'une des revendications précédentes, caractérisé en ce que les mélanges thermiquement projetés, qui se situent dans la zone de 30 % en poids de molybdène pour 70 % en poids d'acier jusqu'à 50 % en poids de molybdène pour 50 % en poids d'acier, présentent une dureté HV 0,05 qui s'écarte au maximum de +/- 5%, par rapport au mélange qui se situe dans la zone de 30 % en poids de molybdène pour 70 % en poids d'acier.

11. Procédé selon l'une des revendications précédentes, caractérisé en ce que l'enduction est appliquée
- en une épaisseur de 80 à 350 µm et/ou
- sur une surface du corps, rendue rugueuse par un courant de particules et/ou d'un fluide, et/ou
- sur une surface traitée pour présenter une valeur moyenne de rugosité (Ra) de 4 à 35 µm, et/ou
- avec une porosité ≤ 10% en volume et/ou
- avec des pores en majorité fermés et/ou
- avec la majorité des pores située dans une zone d'épaisseur > 2 à 40 µm.

12. Procédé de fabrication d'une surface de glissement sur un corps par projection thermique d'une enduction en acier, molybdène et le cas échéant d'autres composants, caractérisé en ce que l'on projette un mélange, qui se compose de :
10 à 70 % en poids de molybdène ou d'un alliage à base de molybdène, avec jusqu'à 40 % en poids de composants d'alliages,
90 à 30 % en poids d'un acier
0 jusqu'à moins de 50 % en poids d'un ou plusieurs autres composants,
pour former l'enduction, qui présente la surface de glissement, sur le corps et en ce que l'enduction est appliquée
- en une épaisseur de 80 à 350 µm et/ou
- sur une surface traitée pour présenter une valeur moyenne de rugosité (Ra) de 4 à 35 µm, et/ou
- avec une porosité ≤ 7% en volume et/ou
- avec des pores en majorité fermés et/ou
- avec la majorité des pores situés dans une zone d'épaisseur > 2 à 40 µm.

13. Procédé selon la revendication 11 ou la revendication 12, caractérisé en ce que l'épaisseur de la couche atteint 100 à 300 µm, et en particulier est ≤ 250 µm.

14. Procédé selon les revendications 11 à 13, caractérisé en ce que la porosité est ≤ 7 % en volume.

15. Procédé selon les revendications 11 à 14, caractérisé en ce que la majorité des pores se situe dans la zone de 3 à 20 µm.

16. Procédé selon l'une des revendications 11 à 15, caractérisé en ce que la surface du corps est traitée au préalable avec du corindon et/ou dotée d'une valeur moyenne de rugosité (Ra) de 5 à 25 µm et en particulier de 5 à 15 µm.

17. Procédé selon l'une des revendications précédentes, caractérisé en ce que l'on utilise comme corps un objet en un alliage d'aluminium, en particulier en AlSi.

18. Procédé selon l'une des revendications précédentes, caractérisé en ce que l'acier remplit au moins l'un des critères suivants :
Teneur en carbone 0,7 - 2,1 % en poids (la teneur minimale en carbone n'étant pas valable pour les revendications 1 à 11), en particulier > 0,8 à 1,5 % en poids
Teneur en chrome 1,0 - 15 % en poids, en particulier 1,0 à 5 % en poids
Teneur en silicium 0,5 à 2 % en poids
Teneur en molybdène 2,5 à 50 % en poids, en particulier 3 à 15 % en poids,
Teneur en tungstène 2,5 à 30 % en poids, en particulier 3 à 15 % en poids,
Teneur en Mo + W 2,5 à 50 % en poids, en particulier 3 à 25 % en poids,
Matrice de Fe α, au moins 50 % en poids, en particulier au moins 70 % en poids de Fe,
Cr fin, Mo, W et/ou carbure de Mn (≤ 1 µm) dans une matrice de Fe α,
Teneur en bore jusqu'à 1 % en poids
Teneur en nickel jusqu'à 0,5 % en poids, en particulier jusqu'à 0,3 % en poids
Teneur en manganèse jusqu'à 4 % en poids
Teneur en phosphore jusqu'à 0,5 % en poids, en particulier jusqu'à 0,2 % en poids
Teneur en soufre jusqu'à 0,5 % en poids, en particulier jusqu'à 0,2 % en poids

19. Procédé de fabrication d'une surface de glissement sur un alliage d'aluminium par projection thermique d'une enduction en acier, molybdène et le cas échéant d'autres composants, caractérisé en ce que l'on projette un mélange, qui se compose de :
10 à 70 % en poids de molybdène (ou d'un alliage à base de molybdène) avec jusqu'à 40 % en poids de composants d'un alliage,
90 à 30 % en poids d'un acier,
0 à < 50 % en poids d'un ou plusieurs autres composants
sur l'alliage d'aluminium pour former l'enduction présentant la surface de glissement, et en ce que l'acier remplit au moins l'un des critères suivants :
Teneur en carbone 0,7 - 2,1 % en poids, en particulier > 0,8 à 1,5 % en poids
Teneur en chrome 1,0 - 15 % en poids, en particulier 1,0 à 5 % en poids
Teneur en silicium 0,5 à 2 % en poids
Teneur en molybdène 2,5 à 50 % en poids, en particulier 3 à 15 % en poids,
Teneur en tungstène 2,5 à 30 % en poids, en particulier 3 à 15 % en poids,
Teneur en Mo + W 2,5 à 50 % en poids, en particulier 3 à 25 % en poids,
Matrice de Fe α, au moins 50 % en poids, en particulier au moins 70 % en poids de Fe,
Cr fin, Mo, W et/ou carbure de Mn (≤ 1 µm) dans une matrice de Fe α

20. Procédé selon la revendication 19, caractérisé en ce que l'acier peut en outre contenir :
Teneur en bore jusqu'à 1 % en poids
Teneur en nickel jusqu'à 0,5 % en poids, en particulier jusqu'à 0,3 % en poids
Teneur en manganèse jusqu'à 4 % en poids
Teneur en phosphore jusqu'à 0,5 % en poids, en particulier jusqu'à 0,2 % en poids
Teneur en soufre jusqu'à 0,5 % en poids, en particulier jusqu'à 0,2 % en poids

21. Procédé selon l'une des revendications précédentes, caractérisé en ce que
l'on enduit les chemises des cylindres d'un moteur à combustion interne.

22. Procédé selon l'une des revendications précédentes, caractérisé en ce que
l'on enduit un bloc moteur en aluminium.

23. Procédé selon l'une des revendications précédentes, caractérisé en ce que
on enlève à nouveau en partie l'enduction, en particulier mécaniquement.

24. Moteur à pistons alternatifs, en particulier moteur à combustion interne, avec un carter moteur en un alliage d'aluminium, qui présente des chemises de cylindres qui sont pourvues d'une enduction d'acier et de molybdène qui est appliquée par des projections thermiques, caractérisé en ce que l'enduction d'acier et de molybdène formant la chemise des cylindres est appliquée par projection thermique d'un mélange se composant de :
10 à 70 % en poids de molybdène, ou d'un alliage de molybdène, avec jusqu'à 40 % en poids de composants d'un alliage,
90 à 30 % en poids d'un acier,
0 à < 50 % en poids d'un ou plusieurs autres composants
sur l'alliage d'aluminium, et en ce que l'acier remplit au moins l'un des critères suivants :
- l'acier projeté thermiquement en tant que tel a une dureté de 300 à 500 HV 0,3;
- l'acier a en tant que tel avant la projection thermique une dureté de 300 à 450 HV 0,3 (recuit);
- l'acier a une dureté, qui est choisie de telle sorte qu'un mélange projeté thermiquement se composant de 30 % en poids de molybdène et de 70 % en poids d'acier a une dureté de 550 à 850 HV 0,05;
- l'acier a une dureté, qui est choisie de telle sorte qu'un mélange projeté thermiquement se composant de 50 % en poids de molybdène et 50 % en poids d'acier a une dureté de 550 à 850 HV 0,05 ;
- l'acier a une dureté, qui est choisie de telle sorte que des mélanges projetés thermiquement, se trouvant dans la zone de 30 % en poids de molybdène pour 70 % en poids d'acier jusqu'à 50 % en poids de molybdène pour 50 % en poids d'acier, présentent une différence de dureté d'au maximum 100 HV 0,05 et/ou une dureté HV 0,05 au maximum plus élevée de 10 % que le mélange le plus mou provenant de cette zone et/ou une dureté HV 0,05 qui s'en écarte au maximum de +/- 10 %, par rapport au mélange se composant de 30 % en poids de molybdène pour 70 % en poids d'acier
Teneur en carbone 0,7 - 2,1 % en poids, en particulier > 0,8 à 1,5 % en poids
Teneur en chrome 1,0 - 15 % en poids, en particulier 1,0 à 5 % en poids
Teneur en silicium 0,5 à 2 % en poids
Teneur en molybdène 2,5 à 50 % en poids, en particulier 3 à 15 % en poids,
Teneur en tungstène 2,5 à 30 % en poids, en particulier 3 à 15 % en poids,
Teneur en Mo + W 2,5 à 50 % en poids, en particulier 3 à 25 % en poids,
Matrice de Fe α, au moins 50 % en poids, en particulier au moins 70 % en poids de Fe,
Cr fin, Mo, W et/ou carbure de Mn (≤ 1 µm) dans une matrice de Fe α
et/ou en ce que l'enduction est appliquée
- en une épaisseur de 80 à 350 µm et/ou
- sur une surface du corps, rendue rugueuse par un courant de particules et/ou d'un fluide et/ou
- sur une surface traitée pour présenter une valeur moyenne de rugosité (Ra) de 4 à 35 µm et/ou
- avec une porosité ≤ 10% en volume et/ou
- avec des pores en majorité fermés et/ou
- avec la majorité des pores située dans une zone d'épaisseur > 2 à 40 µm.
